# EUROPEAN PATENT SPECIFICATION

(11) **EP 4 063 093 B1**
(45) Date of publication and mention of the grant of the patent: **07.01.2026**
(21) Application number: 21382240.6
(22) Date of filing: 24.03.2021
(51) Int. Cl.: B29C 33/52, B29C 64/118, B29C 64/209, B29C 64/227, B29C 64/245, B29C 70/38, B33Y 10/00, B33Y 30/00

(54) **ADDITIVE-MANUFACTURING SYSTEM FOR THE THREE DIMENSIONAL PRINTING OF A REVOLUTION PART AND METHOD FOR PRINTING A THREE DIMENSIONAL REVOLUTION PART**
SYSTEM ZUR GENERATIVEN FERTIGUNG ZUM DREIDIMENSIONALEN DRUCKEN EINES DREHTEILS UND VERFAHREN ZUM DRUCKEN EINES DREIDIMENSIONALEN DREHTEILS
SYSTÈME DE FABRICATION ADDITIVE POUR L'IMPRESSION TRIDIMENSIONNELLE D'UNE PIÈCE DE RÉVOLUTION ET PROCÉDÉ D'IMPRESSION D'UNE PIÈCE DE RÉVOLUTION TRIDIMENSIONNELLE

(43) Date of publication of application: 28.09.2022
(73) Proprietor: Airbus Operations, S.L.U., 28906 Getafe (ES)
(72) Inventor: HERNANDEZ SOTO, Roberto, 45200 ILLESCAS (ES); MAZARRO BODEGA, Alberto, 45200 ILLESCAS (ES)
(74) Representative: Herrero & Asociados, S.L.

(56) References cited:
- US-A1- 2018 065 208
- US-A1- 2018 207 856
- US-A1- 2018 297 280
- US-A1- 2020 324 459

## Description

### TECHNICAL FIELD OF THE INVENTION

The present invention belongs to the field of additive-manufacturing, particularly, the invention provides a system comprising an additive manufacturing machine and a core to serve as nuclei of a revolution part to manufacture, and a method for manufacturing a revolution part.

An object of the present invention is to provide a simple and cost-effective machine for the 3D printing of a revolution part, capable to manufacture reinforced revolution parts with different nuclei, including parts with shoulders forming 90°-transition part sections.

### BACKGROUND OF THE INVENTION

Additive-manufacturing, also known as 3D printing, uses data computer-aided-design (CAD) software or 3D object scanners to direct an additive head to deposit the additive material, layer upon layer, in precise geometric shapes.

The term "additive-manufacturing" references technologies that grow three-dimensional objects one superfine layer at a time. Each successive layer bonds to the preceding layer of melted or partially melted material. Objects are digitally defined by CAD software that is used to create files that essentially slice the object into ultra-thin layers. This information guides the path of the additive head or print head as it precisely deposits material upon the preceding layer.

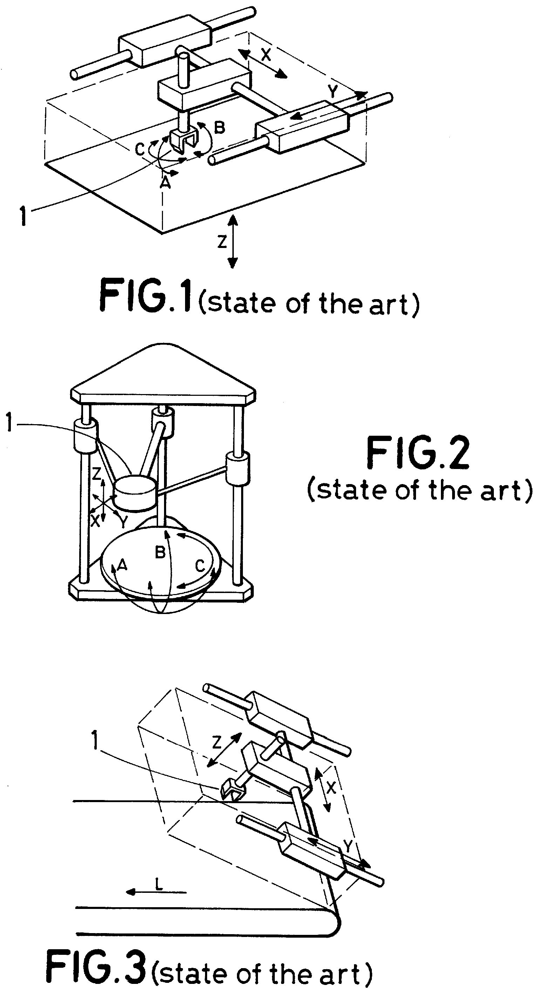

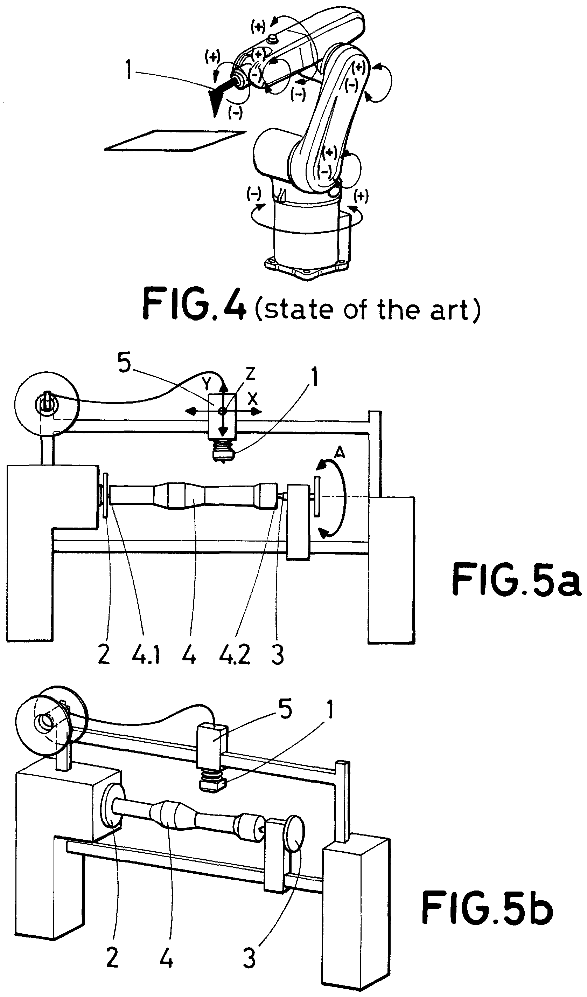

Nowadays, there are several machine structures or types of additive manufacturing machines:
- Cartesian, based on the Cartesian coordinate system. This machine uses three-axis: X, Y, and Z to determine and move the additive-manufacturing head to the right position. See Figure 1.
- Parallelogram. This machine operates with Cartesian coordinates. The machine comprises a round printing plate combined with an additive-manufacturing head fixed at three triangular points. Each of these points moves up and down, determining the position and direction of the additive-manufacturing head. See Figure 2.
- 45° Cartesian or infinite table. This positioning is not determined by the X, Y, and Z coordinates, but by an angle and length. This means that the plate rotates and moves at the same time, with the additive-manufacturing head moving up and down. See Figure 3.
- Robotic arm holding the additive-manufacturing head. This process is not fixed to a printing plate, making it much more flexible and mobile. It is easier to create complex structures, but the cost and the final print quality are not as good as conventional Cartesian printers. See Figure 4.

The above configurations are able to manufacture or reinforce most of the possible parts, except for revolution parts (parts being solid of revolutions), specially the ones composed by a nuclei (core) and a thin reinforcement skin.

US2018065208A1 discloses a manufacturing machine that is capable of subtractive manufacturing and additive manufacturing for a workpiece. The manufacturing machine includes: a first headstock and a second headstock disposed in a machining area and configured to hold a workpiece; a tool spindle and a lower tool rest disposed in the machining area and configured to hold a tool to be used for subtractive manufacturing for the workpiece: an additive manufacturing head configured to discharge a material during additive manufacturing for the workpiece a workpiece gripper configured to grip the workpiece during transportation of the workpiece into and out of the machining area; and a robot arm on which the additive manufacturing head and the workpiece gripper are mountable.

US2018207856A1 discloses an additive manufacturing device to obtain a three-dimensional object includes a printer extruder configured to print a filament of extruded material and a guide unit configured to translate the extruder along one or more translation axes. The device also includes a support that defines a support plane for the three-dimensional object. The support is rotatable around a rotation axis substantially orthogonal to said support plane. The guide unit is also configured to rotate the extruder around one or more rotation axes so as to confer corresponding degrees of freedom in rotation to the extruder.

Therefore, there is a need in the industry for new technical means that provides 3D printed revolution parts, with a reduced complexity and cost.

### SUMMARY OF THE INVENTION

The present invention overcomes the above mentioned drawbacks by providing an additive-manufacturing system for the three dimensional printing of a revolution part, and a method for printing a three dimensional revolution part that reduce the costs actually required for obtaining these kind of parts.

In a first inventive aspect, the invention provides an additive-manufacturing system for the three dimensional printing of a revolution part according to claim 1, that comprises a core element and an additive-manufacturing machine.

The core element has an axis of revolution (A).

The additive-manufacturing machine comprises an additive-manufacturing head for depositing additive material onto the core element for the forming of a revolution part. The additive-manufacturing head is mounted to be movable along to three normal directions (x, y, z).

According to the invention, the core element is rotatably mounted about the axis of revolution (A) of the core element in the additive-manufacturing machine. In addition, the additive-manufacturing head is movably mounted along to both a linear translational movement in an horizontal x-direction parallel to the axis of revolution (A) of the core element, and a linear translational movement along to a vertical y-direction. Further, the additive-manufacturing head is rotatably mounted about a z-direction to allow a normal deposition of the additive material onto the core element.

The core element serves as nuclei, mold or support for the part to be printed. The invention allows the manufacture of any part (piece) being a solid of revolution, even parts comprising abrupt discontinuities on its surfaces, as parts comprising shoulders forming 90° between adjacent sections.

This way, parts that, nowadays, are very complex to manufacture using conventional additive-manufacturing machines, as camshafts or crankshafts can be easily and entirely manufactured from a core (or a previous printed bar used as core) coated by a thermoplastic matrix that performs reinforcement, wearing or protection functions.

In a second inventive aspect, the invention provides a method for printing a three-dimensional revolution part according to claim 5, comprising:
a) providing a core element having an axis of revolution (A),
b) providing an additive-manufacturing machine comprising an additive-manufacturing head for depositing additive material onto the core element for forming a revolution part,
c) mounting the core element in the additive-manufacturing machine such as to rotate about the axis of revolution (A) of said core element,
d) providing first translational means to the additive-manufacturing head, to move said additive-manufacturing head along to an horizontal x-direction, parallel to the axis defined by the rotation of the core element about its axis of revolution (A),
e) providing second translational means to the additive-manufacturing head, to move said additive-manufacturing head along to a vertical y-direction, normal to the horizontal x-direction,
f) providing rotational means to the additive-manufacturing head, to rotate said additive-manufacturing head about a z-direction, normal to both the x-direction and the y-direction, in order to allow a normal deposition of the additive material onto the core element.

According to the above, the main advantages of the invention are:
- It allows the manufacture of parts being a solid of revolution, also reinforced parts with different nuclei (core).
- It allows the manufacture of revolution parts with 90-degree edges.
- It leads to cheaper machines that performs complex parts, which will affect part costs. It allows switching from expensive Selective Laser Sintering (SLS) or Electron Beam Melting (EBM) machines to cheaper Fuse Deposition Modelling (FDM) machines.
- It allows the manufacture of larger parts compared to Selective Laser Sintering (SLS) or Electron Beam Melting (EBM) technologies.
- It may save weight, since it allows the manufacture of parts comprising a lightweight core together with a 3D printed shell with the required properties.

### DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.
Figure 1 shows a perspective view of a state of the art Cartesian additive-manufacturing machine.
Figure 2 shows a perspective view of a state of the art Parallelogram additive-manufacturing machine.
Figure 3 shows a perspective view of a state of the art 45° Cartesian additive-manufacturing machine.
Figure 4 shows a perspective view of a state of the art robotic arm holding an additive-manufacturing head.
Figure 5 shows a schematic lateral view (Figure 5a) and a perspective view (Figure 5b) of a preferred embodiment of the additive-manufacturing system of the invention.

### DETAILED DESCRIPTION OF THE INVENTION

Figure 1 shows a Cartesian additive-manufacturing machine known in the state of the art. The Cartesian machine is based on the Cartesian coordinate system. The three-axis: X, Y, and Z determine the position and direction of the additive-manufacturing head (1). In addition, the additive-manufacturing head (1) can make three rotations A, B, C around the three Cartesian axes.

Figure 2 shows a Parallelogram additive-manufacturing machine known in the state of the art. As previously stated, this machine operates with Cartesian coordinates. It comprises a round printing plate that is combined with the additive-manufacturing head (1) that is fixed at three triangular points. Each of the three points moves up and down, thereby determining the position and direction of the additive-manufacturing head.

Figure 3 shows a perspective view of a 45° Cartesian additive-manufacturing machine known in the state of the art. A bed rotates and moves at the same time and the additive-manufacturing head (1) moves up and down.

Figure 4 shows a robotic based additive-manufacturing machine known in the state of the art wherein the robotic arm holds the additive-manufacturing head (1).

Figures 5a and 5b disclose a preferred embodiment of the additive-manufacturing system of the invention. The system comprises a core element (4) serving as support for the three dimensional printing of the revolution part, and an additive-manufacturing machine for performing the printing.

The core element (4) has an axis of revolution (A) in order to produce a part being a solid of revolution. In Figure 5, the core element (4) has the form of a bar, having two opposite longitudinal ends (4.1, 4.2).

As shown in Figure 5, the core element (4) is mounted in the additive-manufacturing machine to rotate about its axis of revolution (A). In this particular embodiment, the additive-manufacturing machine comprises one rotating holding plate (2) at a one longitudinal end (4.1) of the core element (4) and a spindle (3) at the opposite longitudinal end (4.2) of the core element (4). Both the plate (2) and the spindle (3) are configured to hold the core element (4) and transmit rotation about its axis of revolution (A).

The additive-manufacturing machine comprises an additive-manufacturing head (1) for depositing additive material onto the core element (4). This additive-manufacturing head (1) is mounted to be movable along to three directions (x, y, z) mutually orthogonal to one another.

The additive-manufacturing head (1) is linearly movable along to x-direction and y-direction. The x-direction is horizontal, parallel to the axis of revolution (A) of the core element (4), while the y-direction is vertical, normal to the x-direction. To perform these linear movements, the machine comprises a slidable support (5) for holding and moving the additive-manufacturing head (1) along to both the horizontal x-direction and the vertical y-direction.

In addition, the additive-manufacturing head (1) is rotatable mounted about the z-direction, to allow a normal deposition of the additive material onto the core element (4).

With this configuration, the additive-manufacturing machine is able to perform revolution parts with any disruption on its surface. Additional directions of movement can be added, but the cost of the machine would increase.

According to another preferred embodiment, the core element (4) is made of a removable material, such as a soluble material, or compacted sand. This way, the core element of the part can be removed once the part is manufactured, achieving a hollow part.

## Claims

1. An additive-manufacturing system for the three dimensional printing of a revolution part that comprises:
- a core element (4) having an axis of revolution (A), and
- an additive-manufacturing machine comprising an additive-manufacturing head (1) for depositing additive material onto the core element (4) for the forming of a revolution part, the additive-manufacturing head (1) mounted to be movable along to three normal directions (x, y, z),
- wherein the core element (4) is rotatably mounted about the axis of revolution (A) of the core element (4) in the additive-manufacturing machine,
- wherein the additive-manufacturing head (1) is movably mounted along to both a linear translational movement in an horizontal x-direction, parallel to the axis of revolution (A) of the core element (4), and a linear translational movement along to a vertical y-direction,
- wherein the additive-manufacturing head (1) is also rotatably mounted about a z-direction to allow a normal deposition of the additive material onto the core element (4),
- wherein the additive-manufacturing machine comprises at least one rotating holding plate (2) configured to hold the core element (4) at one longitudinal end (4.1, 4.2) of the core element (4), the rotating holding plate (2) further configured to transmit rotation about the axis of revolution (A) of the core element (4),
**characterized in that** the additive-manufacturing machine comprises at least one spindle (3) located along the direction of the axis of revolution (A) of the core element (4), the spindle (3) configured to hold and transmit rotation to one longitudinal end (4.1, 4.2) of the core element (4).

2. An additive-manufacturing system, according to claim 1, wherein the additive-manufacturing machine comprises the at least one rotating holding plate (2) at one longitudinal end (4.1) of the core element (4) and the at least one spindle (3) at the opposite longitudinal end (4.2) of the core element (4).

3. An additive-manufacturing system, according to any preceding claims, wherein the additive-manufacturing machine comprises a slidable support (5) for holding and moving the additive-manufacturing head (1) along both the horizontal x-direction and the vertical y-direction.

4. An additive manufacturing system, according to any preceding claims, wherein the core element (4) is made of a removable material, such as a soluble material.

5. Method for printing a three dimensional revolution part, comprising:
a) providing a core element (4) having an axis of revolution (A),
b) providing an additive-manufacturing machine comprising an additive-manufacturing head (1) for depositing additive material onto the core element (4) for forming a revolution part,
the method **characterized in that** it comprises the following steps:
c) mounting the core element (4) in the additive-manufacturing machine such as to rotate about the axis of revolution (A) of said core element (4),
d) providing first translational means to the additive-manufacturing head (1), to move said additive-manufacturing head (1) along to an horizontal x-direction, parallel to the axis defined by the rotation of the core element (4) about its axis of revolution (A),
e) providing second translational means to the additive-manufacturing head (1), to move said additive-manufacturing head (1) along to a vertical y-direction, normal to the horizontal x-direction,
f) providing rotational means to the additive-manufacturing head (1), to rotate said additive-manufacturing head (1) about a z-direction, normal to both the x-direction and the y-direction, in order to allow a normal deposition of the additive material onto the core element (4),
wherein the step c) further comprises:
- providing at least one rotating holding plate (2) configured to hold the core element (4),
- placing the at least one rotating holding plate (2) at one longitudinal end (4.1, 4.2) of the core element (4) to hold it and transmit its rotation to the core element (4),
**characterized in that** the step c) further comprises:
- providing at least one spindle (3) configured to hold the core element (4),
- placing the at least one spindle (3) along the direction of the axis of revolution (A) of the core element (4) at one longitudinal end (4.1, 4.2) of the core element (4) to hold it and transmit its rotation to the core element (4).

6. Method for printing a three dimensional revolution part, according to claim 5, wherein the step c) further comprises:
- placing the rotating holding plate (2) at one longitudinal end (4.1) of the core element (4),
- placing the spindle (3) at the opposite longitudinal end (4.2) of the core element (4).

7. Method for printing a three dimensional revolution part, according to any of claims 5-6, wherein the steps d) and/or e) further comprises:
- providing a slidable support (5) for holding and moving the additive-manufacturing head (1) along the horizontal x-direction and/or the vertical y-direction.

8. Method for printing a three dimensional revolution part, according to any of claims 5-7, wherein the core element (4) is made of a removable material, such as a soluble material.

## Patentansprüche

1. Additives Fertigungssystem zum dreidimensionalen Drucken eines Rotationsteils, das umfasst:
- ein Kernelement (4), das eine Rotationsachse (A) aufweist, und
- eine additive Fertigungsmaschine, die einen additiven Fertigungskopf (1) zum Aufbringen von additivem Material auf das Kernelement (4) zum Formen eines Rotationsteils umfasst, wobei der additive Fertigungskopf (1) so angebracht ist, dass er entlang von drei normalen Richtungen (x, y, z) beweglich ist,
- wobei das Kernelement (4) in der additiven Fertigungsmaschine um die Rotationsachse (A) des Kernelements (4) drehbar angebracht ist,
- wobei der additive Fertigungskopf (1) sowohl entlang einer linearen Translationsbewegung in einer horizontalen x-Richtung, parallel zur Rotationsachse (A) des Kernelements (4), als auch entlang einer linearen Translationsbewegung in einer vertikalen y-Richtung beweglich angebracht ist,
- wobei der additive Fertigungskopf (1) auch um eine z-Richtung drehbar gelagert ist, um eine normale Ablagerung des additiven Materials auf dem Kernelement (4) zu ermöglichen,
- wobei die additive Fertigungsmaschine mindestens eine rotierende Halteplatte (2) umfasst, die so konfiguriert ist, dass sie das Kernelement (4) an einem Längsende (4.1, 4.2) des Kernelements (4) hält, wobei die rotierende Halteplatte (2) ferner so konfiguriert ist, dass sie eine Drehung um die Drehachse (A) des Kernelements (4) überträgt,
**dadurch gekennzeichnet, dass** die additive Fertigungsmaschine mindestens eine Spindel (3) umfasst, die entlang der Richtung der Drehachse (A) des Kernelements (4) angeordnet ist, wobei die Spindel (3) so konfiguriert ist, dass sie ein Längsende (4.1, 4.2) des Kernelements (4) hält und eine Drehung auf dieses überträgt.

2. Additives Fertigungssystem gemäß Anspruch 1, wobei die additive Fertigungsmaschine die mindestens eine rotierende Halteplatte (2) an einem Längsende (4.1) des Kernelements (4) und die mindestens eine Spindel (3) am gegenüberliegenden Längsende (4.2) des Kernelements (4) umfasst.

3. Additives Fertigungssystem nach einem der vorangehenden Ansprüche, wobei die additive Fertigungsmaschine eine verschiebbare Halterung (5) zum Halten und Bewegen des additiven Fertigungskopfes (1) sowohl in horizontaler x-Richtung als auch in vertikaler y-Richtung umfasst.

4. Additives Fertigungssystem nach einem der vorangehenden Ansprüche, wobei das Kernelement (4) aus einem entfernbaren Material, beispielsweise einem löslichen Material, besteht.

5. Verfahren zum Drucken eines dreidimensionalen Rotationsteils, mit:
a) Bereitstellen eines Kernelements (4), das eine Rotationsachse (A) aufweist,
b) Bereitstellen einer additiven Fertigungsmaschine, die einen additiven Fertigungskopf (1) zum Aufbringen von additivem Material auf das Kernelement (4) zum Ausbilden eines Rotationsteils umfasst,
wobei das Verfahren **dadurch gekennzeichnet ist, dass** es die folgenden Schritte umfasst:
c) Anbringen des Kernelements (4) in der additiven Fertigungsmaschine, so dass es sich um die Rotationsachse (A) des Kernelements (4) dreht,
d) Bereitstellen einer ersten Translationsvorrichtung für den additiven Fertigungskopf (1), um den additiven Fertigungskopf (1) entlang einer horizontalen x-Richtung parallel zu der durch die Drehung des Kernelements (4) um seine Drehachse (A) definierten Achse zu bewegen,
e) Bereitstellen einer zweiten Translationsvorrichtung für den additiven Fertigungskopf (1), um den additiven Fertigungskopf (1) entlang einer vertikalen y-Richtung zu bewegen, die senkrecht zur horizontalen x-Richtung liegt,
f) Bereitstellen einer Drehvorrichtung für den additiven Fertigungskopf (1), um den additiven Fertigungskopf (1) um eine z-Richtung zu drehen, die sowohl zur x-Richtung als auch zur y-Richtung senkrecht ist, um eine normale Ablagerung des additiven Materials auf dem Kernelement (4) zu ermöglichen,
wobei der Schritt c) ferner umfasst:
- Bereitstellen mindestens einer rotierenden Halteplatte (2), die zum Halten des Kernelements (4) konfiguriert ist,
- Anordnen der mindestens einen rotierenden Halteplatte (2) an einem Längsende (4.1, 4.2) des Kernelements (4), um dieses zu halten und seine Drehung auf das Kernelement (4) zu übertragen,
**dadurch gekennzeichnet, dass** der Schritt c) ferner umfasst:
- Bereitstellen mindestens einer Spindel (3), die zum Halten des Kernelements (4) konfiguriert ist,
- Anordnen der mindestens einen Spindel (3) entlang der Richtung der Drehachse (A) des Kernelements (4) an einem Längsende (4.1, 4.2) des Kernelements (4), um es zu halten und seine Drehung auf das Kernelement (4) zu übertragen.

6. Verfahren zum Drucken eines dreidimensionalen Rotationsteils gemäß Anspruch 5, wobei der Schritt c) ferner umfasst:
- Platzieren der rotierenden Halteplatte (2) an einem Längsende (4.1) des Kernelements (4),
- Platzieren der Spindel (3) an dem gegenüberliegenden Längsende (4.2) des Kernelements (4).

7. Verfahren zum Drucken eines dreidimensionalen Rotationsteils gemäß einem der Ansprüche 5-6, wobei die Schritte d) und/oder e) ferner umfassen:
- Bereitstellen einer verschiebbaren Halterung (5) zum Halten und Bewegen des additiven Fertigungskopfes (1) entlang der horizontalen x-Richtung und/oder der vertikalen y-Richtung.

8. Verfahren zum Drucken eines dreidimensionalen Rotationsteils gemäß einem der Ansprüche 5 bis 7, wobei das Kernelement (4) aus einem entfernbaren Material, beispielsweise einem löslichen Material, besteht.

## Revendications

1. Système de fabrication additive pour l'impression tridimensionnelle d'une pièce de révolution comprenant :
- un élément central (4) ayant un axe de révolution (A), et
- une machine de fabrication additive comprenant une tête de fabrication additive (1) pour le dépôt de matériau additif sur l'élément central (4) afin de former une pièce de révolution, la tête de fabrication additive (1) étant montée de manière à pouvoir se déplacer selon trois directions perpendiculaires (x, y, z).
- dans lequel l'élément central (4) est monté en rotation autour de l'axe de révolution (A) de l'élément central (4) dans la machine de fabrication additive,
- dans lequel la tête de fabrication additive (1) est montée de manière mobile le long d'un mouvement de translation linéaire dans une direction horizontale x, parallèle à l'axe de révolution (A) de l'élément central (4), et d'un mouvement de translation linéaire dans une direction verticale y.
- dans lequel la tête de fabrication additive (1) est également montée en rotation autour d'une direction z pour permettre un dépôt perpendiculaire du matériau additif sur l'élément central (4),
- dans lequel la machine de fabrication additive comprend au moins une plaque de maintien rotative (2) conçue pour maintenir l'élément central (4) à une extrémité longitudinale (4.1, 4.2) de l'élément central (4), la plaque de maintien rotative (2) étant en outre conçue pour transmettre une rotation autour de l'axe de révolution (A) de l'élément central (4),
**caractérisé en ce que** la machine de fabrication additive comprend au moins une broche (3) située le long de la direction de l'axe de révolution (A) de l'élément central (4), la broche (3) étant conçue pour maintenir et transmettre une rotation à une extrémité longitudinale (4.1, 4.2) de l'élément central (4).

2. Système de fabrication additive, selon la revendication 1, dans lequel la machine de fabrication additive comprend au moins une plaque de maintien rotative (2) à une extrémité longitudinale (4.1) de l'élément central (4) et au moins une broche (3) à l'extrémité longitudinale opposée (4.2) de l'élément central (4).

3. Système de fabrication additive, selon quelconque des revendications précédentes, dans lequel la machine de fabrication additive comprend un support coulissant (5) pour maintenir et déplacer la tête de fabrication additive (1) à la fois dans la direction horizontale x et dans la direction verticale y.

4. Système de fabrication additive, selon quelconque des revendications précédentes, dans lequel l'élément central (4) est fabriqué à partir d'un matériau amovible, tel qu'un matériau soluble.

5. Procédé d'impression d'une pièce de révolution tridimensionnelle, comprenant :
a) la fourniture d'un élément central (4) ayant un axe de révolution (A),
b) la fourniture d'une machine de fabrication additive comprenant une tête de fabrication additive (1) pour déposer un matériau additif sur l'élément central (4) afin de former une pièce de révolution,
le procédé étant **caractérisé en ce qu'**il comprend les étapes suivantes :
c) le montage de l'élément central (4) dans la machine de fabrication additive de manière à tourner autour de l'axe de révolution (A) dudit élément central (4),
d) la fourniture d'un premier moyen de translation à la tête de fabrication additive (1), afin de déplacer ladite tête de fabrication additive (1) le long d'une direction horizontale x, parallèle à l'axe défini par la rotation de l'élément central (4) autour de son axe de révolution (A),
e) la fourniture d'un second moyen de translation à la tête de fabrication additive (1), pour déplacer ladite tête de fabrication additive (1) le long d'une direction y verticale, perpendiculaire à la direction x horizontale,
f) la fourniture de moyens de rotation à la tête de fabrication additive (1), pour faire tourner ladite tête de fabrication additive (1) autour d'une direction z, perpendiculaire à la fois à la direction x et à la direction y, afin de permettre un dépôt perpendiculaire du matériau additif sur l'élément central (4),
dans lequel l'étape c) comprend en outre :
- la fourniture d'au moins une plaque de maintien rotative (2) conçue pour maintenir l'élément central (4),
- le placement d'au moins une plaque de maintien rotative (2) à une extrémité longitudinale (4.1, 4.2) de l'élément central (4) afin de le maintenir et de transmettre sa rotation à l'élément central (4),
**caractérisé en ce que** l'étape c) comprend en outre :
- la fourniture d'au moins une broche (3) conçue pour maintenir l'élément central (4),
- le placement d'au moins une broche (3) le long de la direction de l'axe de révolution (A) de l'élément central (4) à une extrémité longitudinale (4.1, 4.2) de l'élément central (4) afin de le maintenir et transmettre sa rotation à l'élément central (4).

6. Procédé d'impression d'une pièce de révolution tridimensionnelle, selon la revendication 5, dans lequel l'étape c) comprend en outre :
- le placement de la plaque de maintien rotative (2) à une extrémité longitudinale (4.1) de l'élément central (4),
- le placement de la broche (3) à l'extrémité longitudinale opposée (4.2) de l'élément central (4).

7. Procédé d'impression d'une pièce de révolution tridimensionnelle, selon quelconque des revendications 5 à 6, dans lequel les étapes d) et/ou e) comprennent en outre :
- la fourniture d'un support coulissant (5) pour maintenir et déplacer la tête de fabrication additive (1) le long de la direction horizontale x et/ou de la direction verticale y.

8. Procédé d'impression d'une pièce de révolution tridimensionnelle, selon quelconque des revendications 5 à 7, dans lequel l'élément central (4) est fabriqué à partir d'un matériau amovible, tel qu'un matériau soluble.
